# EUROPÄISCHE PATENTSCHRIFT

(11) **EP 1 187 715 B1**
(45) Veröffentlichungstag und Bekanntmachung des Hinweises auf die Patenterteilung: **11.08.2004**
(21) Anmeldenummer: 00949102.8
(22) Anmeldetag: 20.06.2000
(51) Int. Cl.: B31D 3/00, E04C 2/36

(54) **FREISTEHENDE WABENSTRUKTUR AUS FLEXIBLEN FOLIENSTREIFEN UND VORRICHTUNG FÜR DEREN HERSTELLUNG**
SELF-CONTAINED HONEYCOMB STRUCTURE FROM FLEXIBLE FILM STRIPS AND DEVICE FOR ITS PRODUCTION
STRUCTURE EN NID D'ABEILLES LIBRE CONSTITUEE DE BANDES DE FILM SOUPLES ET DISPOSITIF POUR SA PRODUCTION

(30) Priorität: 23.06.1999 DE 19928712
(43) Veröffentlichungstag der Anmeldung: 20.03.2002
(73) Patentinhaber: Kehl, Achim, 33818 Leopoldshöhe (DE)
(72) Erfinder: Kehl, Achim, 33818 Leopoldshöhe (DE)
(74) Vertreter: Brandt, Detlef, Dipl.-Ing.
(86) Internationale Anmeldenummer: PCT/DE2000/001949
(87) Internationale Veröffentlichungsnummer: WO 2001/000397

(56) Entgegenhaltungen:
- DE-A- 19 703 961
- FR-A- 1 518 581

## Beschreibung

Die vorliegende Erfindung betrifft eine Wabenstruktur aus flexiblen Materialstreifen, die miteinander verbunden werden, so dass eine freistehende Wabenstruktur entsteht, sowie eine Vorrichtung zu deren Herstellung.

Entsprechende Wabenstrukturen werden unter anderem als transparente oder opake Wärmedämmung, als Füllmaterial für Trennwände oder im Sandwichplattenbau als Kemmaterial eingesetzt.

Werden die Waben als Wärmedämmung eingesetzt, so ist eine geringe Dichte wichtig, um gute Dämmwerte zu erzielen. Sollen die Waben für Sandwichplatten verwendet werden, so ist eine hohe Druckstabilität kombiniert mit einem hohen Scherwiderstand notwendig.

In der Auslegeschrift DT 2231959 B2 und der Offenlegungsschrift DE 197 03 961 A1 sind ähnliche Wabenstrukturen beschrieben.

Die Auslegeschrift DT 2231959 B2 beschreibt eine Wabe aus gewellten, starren Streifen, die eine Eigenstabilität besitzen, so dass sie aufeinander gestapelt werden können, und eine frei stehende Struktur ergeben, ohne dass die Streifen miteinander verschweißt oder verklebt werden. Voraussetzung hierfür ist, dass die Wellenbögen eine Anordnung besitzen, so dass bei jedem Streifen der kleinste freie Abstand zwischen zwei benachbarten Wellenbergen kleiner ist als die größte freie Breite des Wellentales (daher, dass sich die Wellenstreifen nicht ineinander schieben lassen).

Waben dieser Art können nicht aus flexiblen Materialstreifen hergestellt werden, da ein flexibler Streifen sich nicht in eine starre Wellenform biegen lässt

Waben dieser Art werden als Kern für Sandwichplatten aus Metall z.B. im Flugzeugbau eingesetzt.

In der Offenlegungsschrift DE 197 03 961 A1 wird eine Wabenstruktur aus flexiblen Folienstreifen beschrieben, wobei die Folienstreifen in gewellter Form aufeinander geschweißt werden, so dass eine frei stehende Wabe entsteht. Der Hauptunterschied zu DT 2231959 B2 besteht dann, dass hierbei flexible Streifen verwendet werden, und eine Wabe erst dann erzeugt wird, wenn die Streifen durch Schweißen oder Kleben im Übergangsbereich von den waagerechten und senkrechten Teilbereichen der übereinander angeordneten gewellten Streifen miteinander verbunden werden. Die Eigenspannung (Rückstellverhalten)der flexiblen Streifen sorgt dafür, dass die Wabe steifer und stabiler ist als eine Wabe aus vorgewellten Bahnen. Es entsteht eine Wabe, die ähnlich bauchig ist wie die Wabe aus DT 2231959 B2, und sich nahezu isotrop verhält, ob sie nun in senkrechter oder waagerechter Richtung mechanisch belastet wird. Ein Nachteil ist, dass diese Wabe nicht komprimiert werden kann, ohne dass Verzerrungen in der Struktur auftreten. Ein weiterer verfahrensbedingter Nachteil dieser Wabe besteht in dem optisch ungleichmäßig wirkenden Randaufbau. Da einzelne Folienstreifen aufeinandergeschweißt werden, überlappen die überhängenden Folienstreifen an den seitlichen Rändern parallel zur Produktionsrichtung. Um einen sauberen Randabschluss zu bekommen, muss ein Randstreifen abgetrennt werden, wodurch Kostennachteile durch Verschnitt entstehen.

Darüberhinaus ist aus der FR-A- 1 518 581 ein Verfahren zur Herstellung vorgefertigter Platten zur Verwendung beim Bau von Gebäuden bekannt, wobei die Platten eine aus Materialstreifen bestehende Wabenstruktur mit im wesentlichen geraden senkrechten und geraden waagerechten Bereichen aufweisen kann, allerdings ist der Schrift eine Verbindung der Materialstreifen nicht zu entnehmen.

Die der Erfindung zugrunde liegende Aufgabe besteht darin, eine Wabe der eingangs genannten Art dahingehend weiterzubilden, dass eine freiste-hende Wabe aus flexiblen Streifen entsteht, die eine saubere Randstruktur besitzt und sich in einer Richtung parallel zur Produktionsrichtung komprimieren lässt.

Diese Aufgabe wird gemäß der Erfindung bei einer Wabe nach Anspruch 1 dadurch gelöst, dass eine frei stehende Wabe aus flexiblen Streifen erzeugt wird, die allerdings im Gegensatz zu DE 19703961 A1 aus einen U-formigen Querschnitt bildenden waagerechten, gekrümmten Teilbereichen parallel zur Produktionsrichtung und geraden senkrechten Teilbereichen besteht.

Außerdem befindet sich die Klebe- oder Schweißnaht der hier beschnebenen Wabe an den geraden, senkrechten Teilbereichen, und nicht wie in DE 19703961 im Übergangsbereich von den waagerechten und senkrechten Teilbereichen der übereinander angeordneten gewellten Streifen (oder anders ausgedrückt an den Kanten der quaderförmigen Hohlräume).

Diese erfindungswesentlichen Merkmale sind charakteristisch für eine komprimierbare Wabe, wobei der Vorteil vor allem dann besteht, dass sich eine komprimierte Wabe wesentlich kostengünstiger transportieren lässt. Zudem gibt es Anwendungen, zum Beispiel als Wärmedämmung, die einen kleinen Lochdurchmesser nötig machen, wie er einfach durch eine Komprimierung der Wabe erreicht werden kann. Für eine Wabe bedeutet eine Minimierung des Lochdurchmessers eine Maximierung des Wärmedämmwertes (k-Wert).

Die Wabe besitzt unterschiedliches Verhalten bei mechanischer Belastung in waagerechter und in senkrechter Richtung. Eine Komprimierung parallel zur Produktionsrichtung ist möglich, ohne dass sich die Struktur der Wabe verzerrt. Es entsteht längs der Produktionsrichtung an beiden Seiten der Wabe ein sauberer Rand, da die jeweils außen liegende Folie endlos an die Wabe verschweißt wird zur Produktionsrichtung ist möglich, ohne dass sich die Struktur der Wabe verzerrt. Es entsteht längs der Produktionsrichtung an beiden Seiten der Wabe ein sauberer Rand, da die jeweils außen liegende Folie endlos an die Wabe verschweißt wird.

Im Anspruch 5 ist eine Vorrichtung mit den technischen Merkmalen offenbart, mit der durch einen Schweißvorgang eine freistehende, erfindungsgemäße Wabenstruktur mit den Merkmalen des Anspruchs 1 hergestellt werden kann.

Die Vorrichtung zur Herstellung einer Wabenstruktur mit mehreren nebeneinander angeordneten, miteinander zu Wabenbahnen verbundenen flexiblen Materialstreifen weist dabei seitlich unterbrochene, mit beheizten Schweissdrähten versehene Schweißsektionen, durch die die flexiblen Materialstreifen geführt werden, ein kammartiges, zwischen die Materialstreifen einfahrbares Fingersystem zur Bildung der Wabenstruktur durch einen seitliches Versatz der Materialstreifen und zum nachfolgenden Verschweißen der Materialstreifen durch einen Andrückvorgang zwischen Fingersystem und den beheizten Schweissdrähten der Schweißsektionen, sowie ein Schiebersystem zum Vorschub der Wabenstruktur nach Herstellung einer Wabenstrukturbahn infolge eines Schweißzyklus auf, wobei das Fingersystem oder die Schweißsektionen seitlich pro Schweißzyklus für eine Wabenstrukturbahn um den Abstand zweier Schweißsektionen versetzt werden, und wobei das Fingersystem oder die Schweißsektionen bei einem Schweißzyklus eine Versatzbewegung in die eine Richtung und bei jedem darauf folgendem Schweißzyklus eine Versatzbewegung in die entgegengesetzte andere Richtung ausführen.

Die Vorrichtung weist somit einen Schweißkopf auf, der aus mehreren parallel zueinander und in gleichmäßigen Abstand angeordneten Schweißsektionen oder Stegen besteht, die alle an der Vorderseite mit einem Schweißdraht bestückt sind. An den Seitenflächen der Schweißstege liegen flache Schieberelemente an, die parallel zu den Stegen vor und zurück verfahrbar sind. Zwischen den Schieberelementen ist ein kleiner Spalt, durch den die Folienstreifen geführt werden können. Darüber hinaus besitzt die Vorrichtung einen Kamm mit einzelnen Fingern, die vor die Schweißstege in die Wabenstruktur hinein und wieder zurückgefahren werden können. Schweißkopf und Fingerkamm sind parallel zueinander verfahrbar.

Zudem können der Schweißkopf und der Fingerkamm aneinandergepresst werden.

Mit der Vorrichtung wird durch seitliches Verschieben von Schweißkopf und Kamm die erforderliche U-förmige Wellenstruktur der Folienstreifen erzeugt und anschließend werden die Folienstreifen an den senkrechten Teilbereichen miteinander verschweißt.

Im Folgenden wird die erfindungsgemäße Wabenstruktur sowie die Verfahrensschritte zur Herstellung dieser Wabenstruktur anhand der beigefügten Zeichnungen näher erläutert. Es zeigen:

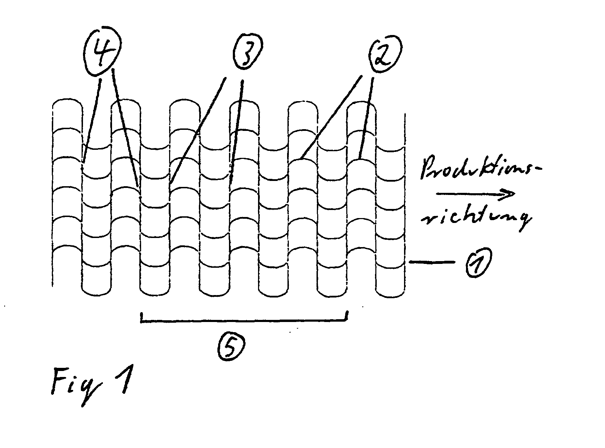

Figur 1 eine erfindungsgemäße Wabenstruktur in Draufsicht.
   Die Verbindung der einzelnen Folienbahnen mit den mit (4) gekennzeichneten Stellen ist durch Verklebung oder, wie oben bereits beschrieben, durch Erstellung einer quer zur Folienbahn laufenden Schweißnaht möglich.
   Die Figuren 2-8 zeigen eine Draufsicht der Vorrichtung zur Herstellung der Wabenstruktur gemäß Figur 1 mit den einzelnen Verfahrensschritten.
   Im Folgenden wird beispielhaft die Vorrichtung mit den einzelnen Verfahrensschritten beschrieben, mit Hilfe derer die erfindungsgemäße Wabenstruktur unter Benutzung von Schweißverbindungen aus Folienbahnen hergestellt werden kann.

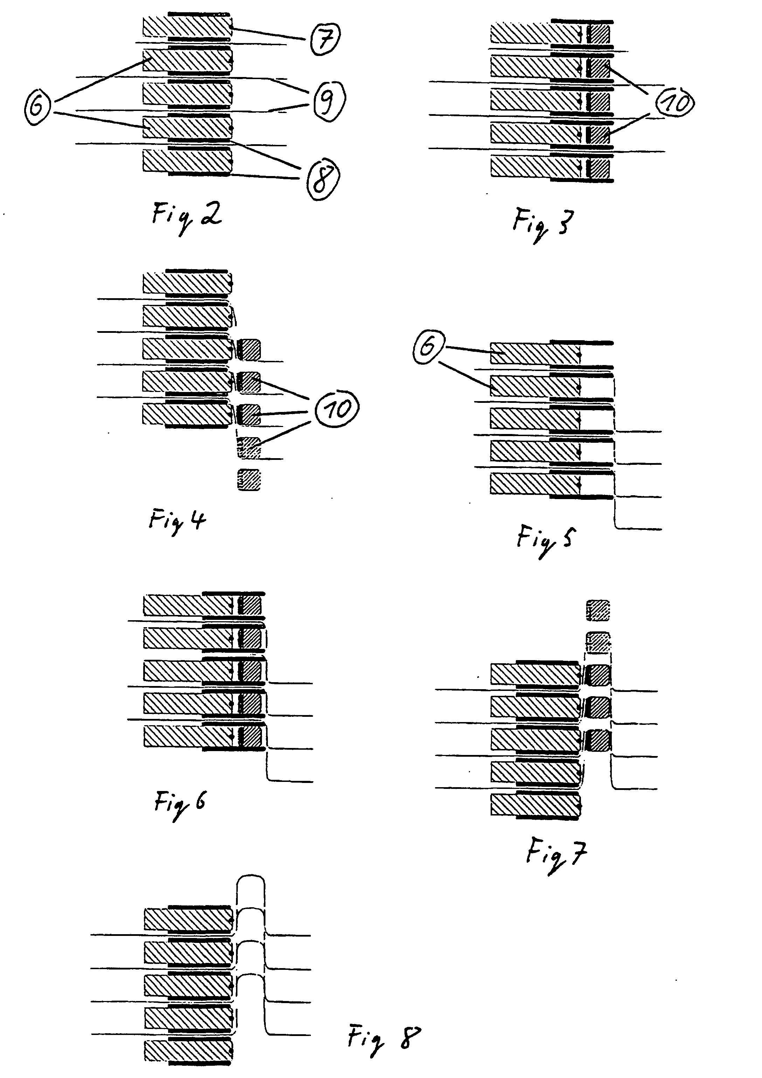

Figur 2 zeigt den Schweißkopf mit den Schweißstegen (6), die an der Vorderseite mit Schweißdrähten (7) ausgestattet sind, und den flachen Vorschubelementen (8), die an den Schweißstegen anliegen.
   Der Schweißkopf befindet sich in der Ausgangsposition, wobei die einzelnen Folienstreifen (9) zwischen den schmalen Spalten der Vorschubelemente eingelegt sind.
Figur 3 zeigt den ersten Verfahrensschritt. Die Vorschubelemente (8) fahren vor, bis sie mit einem bestimmten Abstand aus dem Schweißkopf herausragen. Der Fingerkamm (10) fährt nun zwischen die Vorschubelemente und damit in die Folienstreifen ein, bis er auf ganzer Schweißhöhe vor dem Schweißkopf steht.
   Die Vorschubelemente (8) fahren entsprechend Figur 4 wieder zurück hinter die Schweißebene. Der Schweißkopf und der Fingerkamm (10) verschieben sich nun parallel horizontal um zwei Schweißpunktabstände zueinander. In dieser Position erfolgt die erste Folienschweißung, wobei der Schweißkopf und die Schweißfinger aufeinander gepresst werden.
   Gemäß Figur 5 bewegen sich die Finger (10) wieder aus den Folienstreifen (9) heraus. Dann fahren die Vorschubelemente (8) vor und die zusammengeschweißte Folienstruktur wird vorgeschoben. Der Schweißkopf fährt wieder um 2 Schweißabstände zurück in die Ausgangsposition.
   Danach fahren die Finger (10) entsprechend Figur 6 wieder in die Folienstruktur ein.
   Figur 7 zeigt, wie die Schieber (8) wieder zurück hinter die Schweißebene fahren.
   Der Schweißkopf und die Finger (10) verschieben sich nun in entgegengesetzter Richtung. Es folgt wiederum das Anpressen vom Schweißkopf mit den Fingern (10) und der Folienschweißvorgang.
   Dann fahren gemäß Figur 8 die Finger (10) wieder aus der Folienstruktur heraus und der Schrittzyklus beginnt wieder von Neuem bei Schritt 1 (Figur 3).

## Patentansprüche

1. Wabenstruktur mit mehreren nebeneinander angeordneten, miteinander verbundenen flexiblen Materialstreifen, die **dadurch gekennzeichnet sind, dass** die Materialstreifen eine Wellenform mit U-förmigen Querschnitt von im Wesentlichen geraden, senkrechten Teilbereichen (3) und gekrümmten, waagerechten Teilbereichen (2) besitzt, und dass die Materialstreifen an Berührungslinien (4) der geraden, senkrechten Teilbereiche miteinander verbunden sind.

2. Wabenstruktur nach Anspruch 1, **dadurch gekennzeichnet, dass** die Materialstreifen aus Folien (z.B. Kunststoff), Papier, Metall oder Verbundmaterialien bestehen können.

3. Wabenstruktur nach Anspruch 1, **dadurch gekennzeichnet, dass** die Materialstreifen miteinander verschweißt sind.

4. Wabenstruktur nach Anspruch 1, **dadurch gekennzeichnet, dass** die Materialstreifen miteinander verklebt sind.

5. Vorrichtung zur Herstellung einer Wabenstruktur mit mehreren nebeneinander angeordneten, miteinander zu Wabenbahnen verbundenen flexiblen Materialstreifen nach einem der Ansprüche 1 bis 3, **dadurch gekennzeichnet, dass** sie seitlich unterbrochene, mit beheizten Schweißdrähten versehene Schweißsektionen (6), durch die die flexiblen Materialstreifen (9) geführt werden, ein kammartiges, zwischen die Materialstreifen einfahrbares Fingersystem (10) zur Bildung der Wabenstruktur durch einen seitliches Versatz der Materialstreifen (9) und zum nachfolgenden Verschweißen der Materialstreifen (9) durch einen Andrückvorgang zwischen Fingersystem (10) und den beheizten Schweissdrähten der Schweißsektionen (6), sowie ein Schiebersystem (8) zum Vorschub der Wabenstruktur nach Herstellung einer Wabenstrukturbahn infolge eines Schweißzyklus aufweist, wobei das Fingersystem (10), oder die Schweißsektionen (6) seitlich pro Schweißzyklus für eine Wabenstrukturbahn um den Abstand zweier Schweißsektionen versetzt werden, und wobei das Fingersystem (10) oder die Schweißsektionen (6) bei einem Schweißzyklus eine Versatzbewegung in die eine Richtung und bei jedem darauf folgendem Schweißzyklus eine Versatzbewegung in die entgegengesetzte andere Richtung ausführen.

6. Vorrichtung nach Anspruch 5, **dadurch gekennzeichnet, dass** die Finger (10) mit einem Heizdraht (7) zum Verschweißen der Materialstreifen ausgestattet sind.

7. Vorrichtung nach Anspruch 5, **dadurch gekennzeichnet, dass** die Schweißsektionen (6), oder die Finger (10), auch mit Hochfrequenz- oder Ultraschallschweißeinheiten ausgerüstet werden können.

8. Vorrichtung nach Anspruch 5, **dadurch gekennzeichnet, dass** die Schweißsektionen (6), oder die Finger (10), auch mit Laserschweißeinheiten ausgerüstet werden können.

9. Vorrichtung nach Anspruch 5, **dadurch gekennzeichnet, dass** die Schweißsektionen (6), oder die Finger (10), auch mit beheizten Metallbügeln, Metallelementen oder Heizpatronen als Schweißeinheiten ausgerüstet werden können.

10. Vorrichtung nach Anspruch 5, **dadurch gekennzeichnet, dass** die Schweißsektionen (6), oder die Finger (10), auch mit Heißluftschweißeinheiten ausgerüstet werden können.

11. Vorrichtung nach Anspruch 5, **dadurch gekennzeichnet, dass** die Schweißsektionen (6), oder die Finger (10), auch mit Induktionsschweißeinheiten ausgerüstet werden können.

12. Vorrichtung nach Anspruch 5, **dadurch gekennzeichnet, dass** die Schweißsektionen (6), oder die Finger (10), auch mit Reibschweißeinheiten ausgerüstet werden können.

13. Vorrichtung nach Anspruch 5, **dadurch gekennzeichnet, dass** der Vorschub der Wabe mit Fingersystemen, die in die fertig geschweißte Wabe hineinfahren und anschließend eine Vorschubbewegung vollführen, gelöst werden kann.

## Claims

1. Honeycomb structure comprising a plurality of juxtaposed flexible material strips, which are connected to one another and which are **characterized in that** the material strips has a corrugated shape with a U-shaped cross section of substantially straight, vertical sub-regions (3) and curved, horizontal sub-regions (2), and that the material strips are connected to one another at contact lines (4) of the straight, vertical sub-regions.

2. Honeycomb structure according to claim 1, **characterized in that** the material strips may comprise foils (e.g. plastics material), paper, metal or composite materials.

3. Honeycomb structure according to claim 1, **characterized in that** the material strips are welded to one another.

4. Honeycomb structure according to claim 1, **characterized in that** the material strips are glued to one another.

5. Apparatus for manufacturing a honeycomb structure comprising a plurality of juxtaposed flexible material strips connected to one another to form honeycomb webs according to one of claims 1 to 3, **characterized in that** the apparatus comprises laterally interrupted welding sections (6), which are provided with heated welding wires and through which the flexible material strips (9) are conveyed, a comb-like finger system (10) introducible between the material strips in order to form the honeycomb structure by virtue of a lateral offset of the material strips (9) and in order subsequently to weld the material strips (9) together by means of a contact pressure operation between finger system (10) and the heated welding wires of the welding sections (6), as well as a slide system (8) for forward feed of the honeycomb structure after manufacture of a honeycomb structure web as a result of a welding cycle, wherein the finger system (10), or the welding sections (6) per welding cycle for a honeycomb structure web are offset laterally by the distance of two welding sections, and wherein the finger system (10) or the welding sections (6) during one welding cycle execute an offset motion in the one direction and during each following welding cycle execute an offset motion in the other, opposite direction.

6. Apparatus according to claim 5, **characterized in that** the fingers (10) are equipped with a heating wire (7) for welding together the material strips.

7. Apparatus according to claim 5, **characterized in that** the welding sections (6), or the fingers (10), may also be equipped with high-frequency or ultrasonic welding units.

8. Apparatus according to claim 5, **characterized in that** the welding sections (6), or the fingers (10), may also be equipped with laser welding units.

9. Apparatus according to claim 5, **characterized in that** the welding sections (6), or the fingers (10), may also be equipped with heated metal straps, metal elements or heating cartridges as welding units.

10. Apparatus according to claim 5, **characterized in that** the welding sections (6), or the fingers (10), may also be equipped with hot-air welding units.

11. Apparatus according to claim 5, **characterized in that** the welding sections (6), or the fingers (10), may also be equipped with induction welding units.

12. Apparatus according to claim 5, **characterized in that** the welding sections (6), or the fingers (10), may also be equipped with friction welding units.

13. Apparatus according to claim 5, **characterized in that** forward feeding of the honeycomb may be effected by finger systems, which travel into the fully welded honeycomb and subsequently perform a forward feed motion.

## Revendications

1. Structure à nid d'abeille avec plusieurs bandes d'un matériau flexible reliées entre elles, disposées côte à côte, qui sont **caractérisées en ce que** les bandes du matériau présentent une forme ondulée avec une section transversale en U de zones partielles (3) verticales, sensiblement rectilignes et de zones partielles (2) horizontales courbées, et **en ce que** les bandes du matériau sont reliées entre elles sur des lignes de contact (4) des zones partielles verticales, rectilignes.

2. Structure à nid d'abeille selon la revendication 1, **caractérisée en ce que** les bandes du matériau peuvent être constituées de feuilles (par exemple de matière plastique), de papier, de métal ou de matériaux composites.

3. Structure à nid d'abeille selon la revendication 1, **caractérisée en ce que** les bandes du matériau sont soudées entre elles.

4. Structure à nid d'abeille selon la revendication 1, **caractérisée en ce que** les bandes du matériau sont collées entre elles.

5. Dispositif de fabrication d'une structure à nid d'abeille avec plusieurs bandes d'un matériau flexible disposées côte à côte, reliées entre elles en bandes à nid d'abeille, selon l'une des revendications 1 à 3, **caractérisé en ce qu'**il comporte des sections de soudage (6) interrompues latéralement, pourvues de fils de soudage chauffés, à travers lesquelles sont guidées les bandes (9) du matériau flexible, un système à doigts (10) de type peigne pouvant être introduit entre les bandes du matériau, pour réaliser la structure à nid d'abeille par un décalage latéral des bandes (9) du matériau et pour le soudage consécutif des bandes (9) du matériau par un processus de pression entre le système à doigts (10) et les fils de soudage chauffés des sections de soudage (6), ainsi qu'un système à pousseur (8) pour l'avance de la structure à nid d'abeille après réalisation d'une bande de structure à nid d'abeille à la suite d'un cycle de soudage, le système à doigts (10) ou les sections de soudage (6) étant décalés latéralement par cycle de soudage pour une bande de structure à nid d'abeille, de l'écartement entre deux sections de soudage, et le système à doigts (10) ou les sections de soudage (6) exécutant, au cours d'un cycle de soudage, un mouvement de décalage dans un sens et, à chaque cycle de soudage suivant, un mouvement de décalage dans l'autre sens opposé.

6. Dispositif selon la revendication 5, **caractérisé en ce que** les doigts (10) sont équipés d'un fil chauffant (7) pour le soudage des bandes du matériau.

7. Dispositif selon la revendication 5, **caractérisé en ce que** les sections de soudage (6) ou les doigts (10) peuvent être équipés aussi d'unités de soudage à haute fréquence ou à ultrasons.

8. Dispositif selon la revendication 5, **caractérisé en ce que** les sections de soudage (6) ou les doigts (10) peuvent être équipés aussi d'unités de soudage à laser.

9. Dispositif selon la revendication 5, **caractérisé en ce que** les sections de soudage (6) ou les doigts (10) peuvent être équipés aussi d'étriers métalliques chauffés, d'éléments métalliques ou de cartouches de chauffage servant d'unités de soudage.

10. Dispositif selon la revendication 5, **caractérisé en ce que** les sections de soudage (6) ou les doigts (10) peuvent être équipés aussi d'unités de soudage à air chaud.

11. Dispositif selon la revendication 5, **caractérisé en ce que** les sections de soudage (6) ou les doigts (10) peuvent être équipés aussi d'unités de soudage à induction.

12. Dispositif selon la revendication 5, **caractérisé en ce que** les sections de soudage (6) ou les doigts (10) peuvent être équipés aussi d'unités de soudage par friction.

13. Dispositif selon la revendication 5, **caractérisé en ce que** l'avance des nids d'abeille avec système à doigts qui pénètrent à l'intérieur des nids d'abeille soudés finis puis exécutent un mouvement d'avance, peut être supprimée.
